# EUROPEAN PATENT SPECIFICATION

(11) **EP 2 320 504 B1**
(45) Date of publication and mention of the grant of the patent: **09.10.2013**
(21) Application number: 09175547.0
(22) Date of filing: 10.11.2009
(51) Int. Cl.: H01M 16/00, H01M 8/04, H01M 8/10

(54) **Method of operating a fuel cell/battery passive hybrid power supply**
Verfahren zum Betrieb einer passiven Brennstoffzellen-/Batterie-Hybridstromversorgung
Procédé de fonctionnement d'une alimentation électrique hybride passive à batterie/pile à combustible

(43) Date of publication of application: 11.05.2011
(73) Proprietor: Belenos Clean Power Holding AG, 2502 Bienne (CH)
(72) Inventor: Bernard, Jérôme, 5400 Baden (CH); Hofer, Marcel, 5612 Villmergen (CH); Buechi, Félix, 4900 Langenthal (CH); Dietrich, Philipp, 5305 Unterendingen (CH)
(74) Representative: Ravenel, Thierry Gérard Louis

(56) References cited:
- US-A1- 2002 034 669
- US-A1- 2003 022 043
- US-A1- 2003 044 658

## Description

### FIELD OF THE INVENTION

The present invention concerns a method for limiting the output voltage of a fuel cell/battery passive hybrid power supply operating in, or near, zero load conditions, in such a way as both not to exceed the upper voltage limit of the battery, without it being necessary to stop the fuel cell or to disconnect it from the battery. The invention more particularly concerns such a method wherein the fuel cells of the power supply are of a type designed to use hydrogen as fuel and pure oxygen as oxidizer.

### BACKGROUND OF THE INVENTION

Electrochemical fuel cells of the above-mentioned type convert reactants, namely a stream of hydrogen and a stream of oxygen, into electric power and water. Proton exchange membrane fuel cells (PEMFC) generally comprise a solid polymer electrolyte membrane disposed between two porous electrically conductive electrode layers so as to form a membrane electrode assembly (MEA). In order to induce the desired electrochemical reaction, the anode electrode and the cathode electrode each comprise one or more catalyst. These catalysts are typically disposed at the membrane/electrode layer interface.

At the anode, the hydrogen moves through the porous electrode layer and is oxidized by the catalyst to produce protons and electrons. The protons migrate through the solid polymer electrolyte towards the cathode. The oxygen, for its part, moves through the porous cathode and reacts with the protons coming through the membrane at the cathode electrocatalyst. The electrons travel from the anode to the cathode through an external circuit, producing an electrical current.

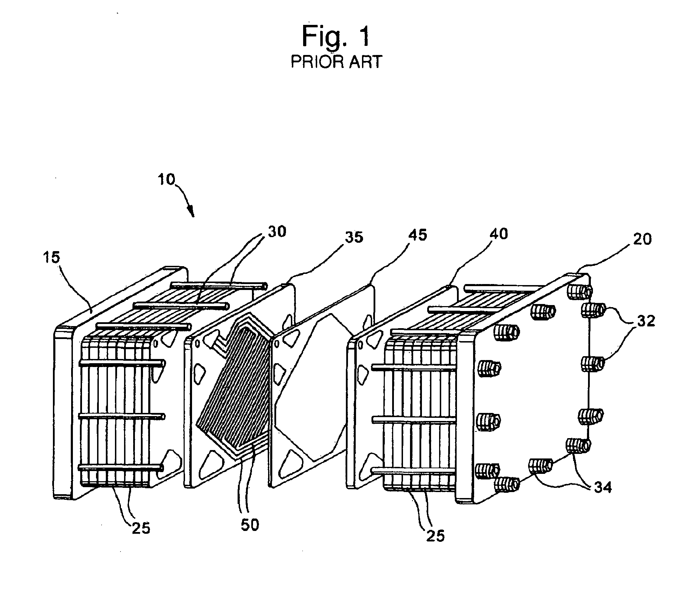

Figure 1 illustrates, in exploded view, a prior art proton exchange membrane fuel cell stack 10. Stack 10 includes a pair of end plate assemblies 15, 20 and a plurality of fuel cell assemblies 25. In this particular example, electrically insulating tie rods 30 extend between end plate assemblies 15, 20 to retain and secure stack assembly 10 in its assembled state with fastening nuts 32. Springs 34 threaded on tie rods 30 interposed between fastening nuts 32 and end plate 20 apply resilient compressive force to stack 10 in the longitudinal direction. Reactant and coolant fluid streams are supplied to, and exhausted from, internal manifolds and passages in stack 10 via inlet and outlet ports (not shown) in end plate 15.

Each fuel cell assembly 25 includes an anode flow field plate 35, a cathode flow field plate 40 and an MEA 45 interposed between plates 35 and 40. Anode and cathode flow field plates 35 and 40 are made out of an electrically conductive material and act as current collectors. As the anode flow field plate of one cell sits back to back with the cathode flow field plate of the neighboring cell, electric current can flow from one cell to the other and thus trough the entire stack 10. Other prior art fuel cell stacks are known in which individual cells are separated by a single bipolar flow field plate instead of by separate anode and cathode flow field plates.

Flow field plates 35 and 40 further provide a fluid barrier between adjacent fuel cell assemblies so as to keep reactant fluid supplied to the anode of one cell from contaminating reactant fluid supplied to the cathode of another cell. At the interface between MEA 45 and plates 35 and 40, fluid flow fields 50 direct the reactant fluids to the electrodes. Fluid flow field 50 typically comprises a plurality of fluid flow channels formed in the major surfaces of plates 35 and 40 facing MEA 45. One purpose of fluid flow field 50 is to distribute the reactant fluid to the entire surface of the respective electrodes, namely the anode on the hydrogen side and the cathode on the oxygen side.

One known problem with PEMFCs is the progressive degradation of performance over time. Actually, long-term operation of solid polymer fuel cells has been proven, but only under relatively ideal conditions. In contrast, when the fuel cell has to operate in a wide range of conditions, as is the case for automotive applications in particular, the ever-changing conditions (often modeled as load cycling and start-stop cycles), have been shown to reduce durability and lifespan drastically.

Different types of non-ideal conditions have been identified in the literature. A first of these conditions is referred to as "high cell voltage"; it is known that exposing a fuel cell to low or zero current conditions, leads to higher degradation rates in comparison to operation at an average constant current. A second non-ideal condition is "low cell voltage"; it is further known that drawing a peak current from the fuel cell also leads to increased degradation rates. It follows from the above that, in order to preserve the lifespan of a fuel cell, it is preferable to avoid both "high cell voltage" and "low cell voltage" operating conditions. In the case of commonly known types of PEMFCs, a reasonable upper safety limit for ensuring against the occurrence of high cell voltage should be set no higher than 0.90 volts, preferably no higher than 0.85 volts, and a lower safety limit for ensuring against low cell voltage should be set no lower than 0.65 volts, preferably no lower than .70 volts. In other words, the fuel cell should be operated only in the limited voltage range between 0.65 and 0.90 volts, preferably between 0.70 and 0.85 volts.

Automotive applications are characterized by particularly abrupt changes of load power. For this reason, power supplies designed for automotive applications generally comprise an energy storage battery, such as an electrochemical battery or a super capacitor, associated with the fuel cell system. In this type of power supply (called hereafter a fuel cell/battery hybrid power supply) the battery can work as a buffer: supplying electric power when there is a peak in the load and, conversely, storing excess electric power in case of low or zero load conditions.

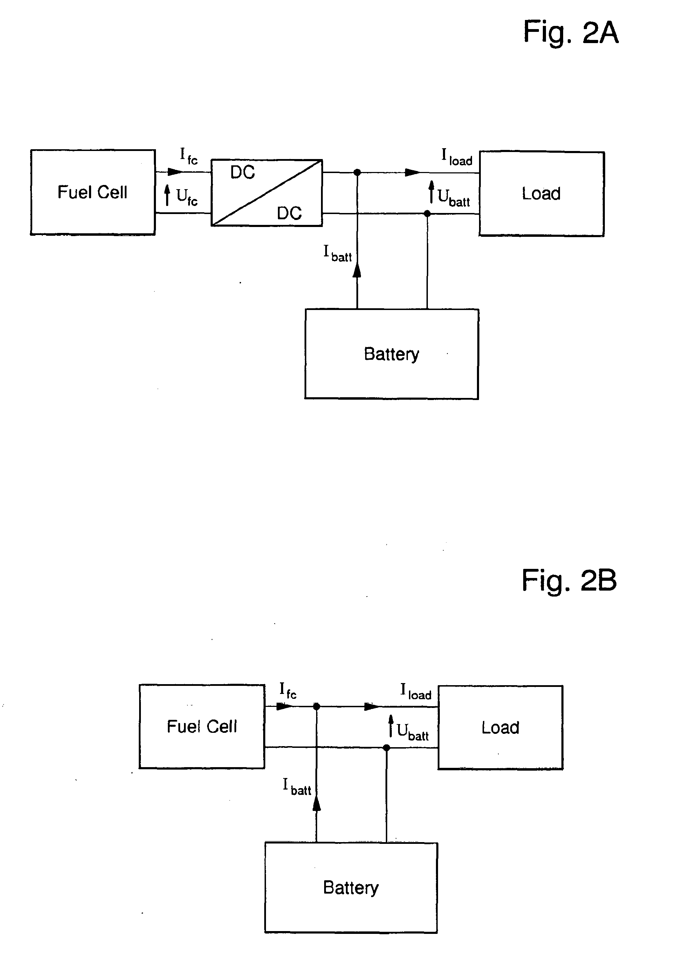

Figures 2A and 2B are two block diagrams respectively showing an active and a passive hybrid power supply. In a fuel cell/battery active hybrid power supply, the fuel cell system is connected to the load circuit through a DC/DC converter, and the battery is connected to the load circuit in parallel with the DC/DC converter as shown in figure 2A. By controlling the gain of the DC/DC converter, it possible to actively adjust the power distribution within the hybrid power supply. A fuel cell/battery passive hybrid power supply is simpler. The fuel cell system and the battery are electrically connected directly in parallel as illustrated in figure 2B. The drawback is that many operating variables of the power supply are uncontrolled. In particular, the current split between the fuel cell system and the battery is imposed by the internal impedance of each device. Furthermore, since the battery and the fuel cell system are directly connected, their voltages are always the same.

In principle, the use of a fuel cell/battery hybrid power supply allows operating the fuel cells in the desired limited voltage range. However, once the battery is completely charged, it obviously ceases to be available for storing the excess electric power supplied by the fuel cells. Known solutions to this last problem are, disconnecting the fuel cell stack (particularly in the case of a passive hybrid), setting the gain of the DC/DC converter practically to zero (in the case of an active hybrid), or shutting down the fuel cells until the level of charge of the battery reaches a lower threshold. However, start-stop cycles also contribute to the degradation of performance of the fuel cell system, while disconnecting the fuel cell system without shutting it down requires the use of a resistive load to dissipate the energy produced by the stack. This amounts to a considerable waste of energy.
US 2002/0034669 discloses an apparatus and method to control the supply of reactant gases to a fuel cell.

### SUMMARY OF THE INVENTION

It is accordingly an object of the present invention to provide a method for limiting the output voltage of a fuel cell/battery passive hybrid power supply operating in, or near, zero load conditions, to a desired limited voltage range adequate for the battery as well as for the fuel cell system, without having to disconnect, or shut down and restart the fuel cell system.

The method of the present invention is defined by the appended claim 1.

According to the present invention, limiting the hydrogen and oxygen streams supplied to the fuel cell while actuating the hydrogen and oxygen recirculating pumps makes it possible to keep the output voltage below a predetermined maximum limit. According to the invention, the maximum limit is the lowest of either the maximum voltage limit of the battery or the maximum voltage limit of the fuel cell system (0.90 volts/cell).

An advantage of the method of the present invention is that it allows adjusting the power distribution within the passive hybrid power supply, without the need for a variable gain DC/DC converter like the one used in active hybrid power supplies. In particular, the method of the present invention allows maintaining a low output voltage even in near-zero load conditions. More generally, the method of the present invention allows operating a fuel cell/battery passive hybrid power supply with the same overall efficiency as that of a more expensive, more complicated, heavier and larger active hybrid power supply.

Furthermore, one will understand that, according to the present invention, by maintaining the hydrogen pressure between 70 and 130 % of the oxygen pressure, the method of the invention avoids large pressure differences across the membrane of the fuel cells and, in the particular case of higher hydrogen pressure, avoids fuel starvation at the anode.

Preferably, the method of the invention maintains the fuel cell voltage in a range corresponding to between 0.70 and 0.85 volts/cell.

Another advantage of the method of the present invention is that it allows operating the hybrid power supply in zero net output load conditions even when the storage battery is completely charged. Indeed, by reducing the pressure of at least one of the reactants below 0.7 bar_{absolute} the output power of the hybrid power supply can be reduced to no more than what is necessary to power the auxiliaries (the parasitic load).

### BRIEF DESCRIPTION OF THE DRAWINGS

Other features and advantages of the present invention will appear upon reading the following description, given solely by way of non-limiting example, and made with reference to the annexed drawings, in which:
- Figure 1 is an exploded view of a conventional fuel cell stack (prior art);
- Figure 2A and 2B are two block diagrams respectively showing an active and a passive hybrid power supply at a conceptual level (prior art);
- Figure 3 is a diagram showing a particular embodiment of a fuel cell/battery passive hybrid power supply comprising a fuel cell stack supplied with pure hydrogen and oxygen;
- Figure 4 is a more detailed functional diagram of the passive hybrid power supply of figure 3;
- Figure 5A is a diagram showing current/voltage curves for a polymer electrolyte fuel cell at different pressures;
- Figure 5B is a diagram showing maximum and minimum battery voltages as a function of the state of charge (SOC) of a storage battery;
- Figure 6 is a diagram generally showing how the load can be shared between the fuel cell system and the storage battery, and particularly how the passive hybrid power supply makes it possible to dispense with shutting down the fuel cell system in zero connected load operating conditions, even if no energy storage capacity is available in the battery.

### DETAILED DESCRIPTION OF THE INVENTION

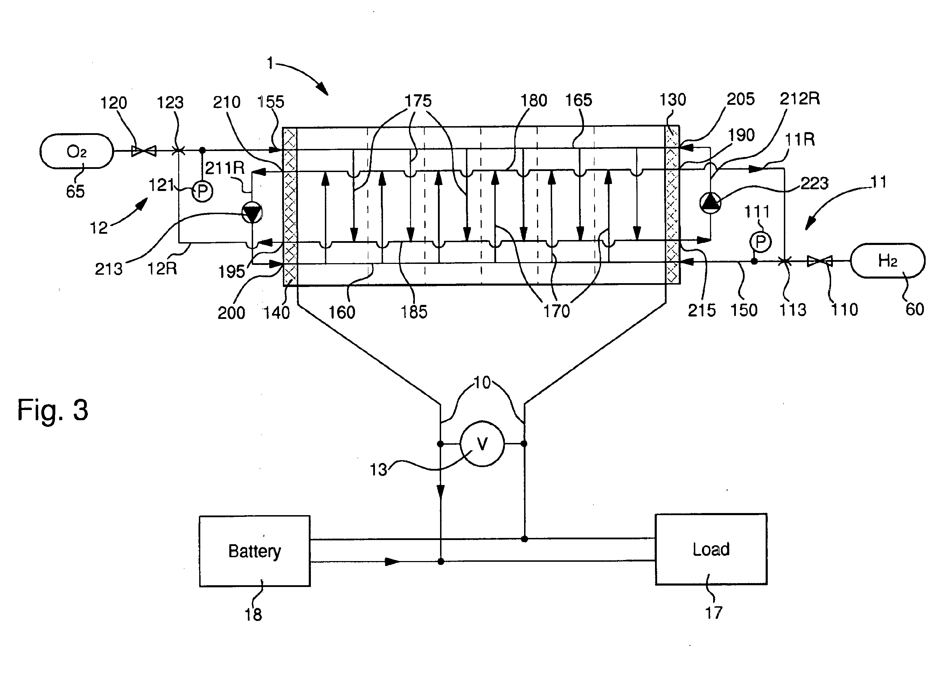

The fuel cell stack 1 of the passive hybrid power supply illustrated in Figure 3 is of a type designed to use hydrogen as fuel and pure oxygen as oxidizer. It includes end plates 130, 140, a hydrogen inlet port 150 in end plate 130 and an oxygen inlet port 155 in end plate 140. Stack 1 further includes a hydrogen supply manifold 160 and an oxygen supply manifold 165 respectively for supplying a hydrogen stream and an oxygen stream to a plurality of individual fuel cells.

Hydrogen and oxygen flow fields associated with each fuel cell are represented by arrows 170 and 175. A hydrogen exhaust manifold 180 and an oxygen exhaust manifold 185 remove the depleted reactants and the reaction products from the stack through a hydrogen outlet port 190 and an oxygen outlet port 195.

As illustrated, the fuel cell system comprises a pressurized hydrogen storage vessel 60 connected the hydrogen inlet 150 of the stack by means of a supply line equipped with a hydrogen supply valve 110 and an ejector pump 113. A hydrogen pressure sensor 111 is arranged on the supply line near the hydrogen inlet 150 so as to measure the pressure of the hydrogen supplied to the fuel cell stack 1. A first hydrogen recirculating line 11 R connects outlet port 190 of the stack to the hydrogen supply line, downstream of supply valve 110. The ejector pump 113 provides for recirculating the leftover hydrogen and for mixing it with fresh hydrogen.

In a similar way, the fuel cell system comprises a pressurized oxygen storage vessel 65 connected the oxygen inlet 155 of the stack by means of a oxygen supply line equipped with a oxygen supply valve 120 and a vacuum ejector pump 123. An oxygen pressure sensor 121 is arranged on the supply line near the oxygen inlet 155 so as to measure the pressure of the oxygen supplied to the fuel cell stack 1. An oxygen recirculating line 12R connects outlet port 195 of the stack to the oxygen supply line, downstream of supply valve 120. The ejector pump 123 (or any appropriate type of vacuum pump) provides for recirculating and for mixing the used oxygen with fresh oxygen.

The stack of the fuel cell system shown in Figure 3 further comprises an auxiliary hydrogen inlet 200 and an auxiliary hydrogen outlet 210 connected to each other by a second hydrogen recirculating line 211 R. Line 211 R is equipped with an auxiliary hydrogen pump 213 provided for supplementing ejector pump 113. The stack 1 also comprises an auxiliary oxygen inlet 205, an auxiliary oxygen outlet 215 and an auxiliary oxygen pump 223, arranged on a second oxygen recirculating line 212R. Auxiliary pump 223 is provided for supplementing ejector pump 123.

The fuel cell system shown in Figure 3 further comprises moisture management means (not shown). As product water is formed on the cathode side of the fuel cells by the combination of hydrogen and oxygen ions, the product water must be drawn away from the cathode side of the fuel cells. In particular, in order to avoid flooding, the moisture management means usually comprise a gas-liquid separator arranged on the oxygen recirculating line 12R. A second gas-liquid separator is preferably also arranged on the hydrogen recirculating line 11 R. At the same time, moisture must be provided to both the anode and the cathode side of the cells in amounts that will prevent the membrane drying out.

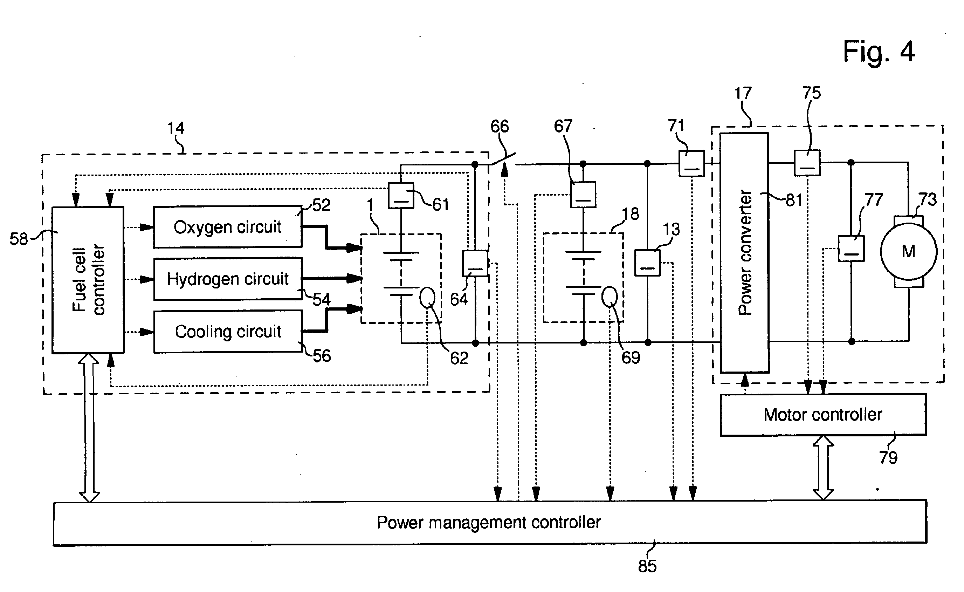

As can further be seen in Figure 3, the stack 1 is associated with a battery 18 connected in parallel in order to form a fuel cell/battery passive hybrid power supply for delivering electric energy to a load circuit 17. Preferably, the storage battery 18 is a Li-Ion battery pack. However, according to other embodiments of the invention, any other form of storage battery could be used. Referring now to Figure 4, the operating of the passive hybrid power supply of the present example will be explained in grater detail. As in Figure 3, reference number 1 refers to the fuel cell stack, number 18 refers to the storage battery, and number 17 refers to the load circuit.

As already explained, the fuel cell stack is part of a fuel cell system 14 comprising an oxygen circuit 52, a hydrogen circuit 54, and a cooling circuit 56. The fuel cell system also includes a fuel cell controller 58 that manages the oxygen, hydrogen and cooling circuits. Apart from the pressure sensors (not shown in Figure 4) already described in relation to figure 3, the fuel cell system comprises a stack current sensor 61, a stack temperature sensor 62 and at least one fuel cell voltage sensor 64. The fuel cell controller 58 uses the data provided by all the sensors in order to manage the operating of fuel cell system.

Still referring to Figure 4, number 66 refers to a switch used to disconnect the fuel cell system 14 from the battery 18 and the load circuit 17, number 67 is a battery current sensor, number 71 is a load current sensor, and number 13 is the battery voltage sensor also shown in Figure 3. According to the present invention, the switch 66 is intended to be used only during start-up and shut-down of the fuel cell system. As previously mentioned, as long as the storage battery 18 and the fuel cell system 14 are connected, their voltages are identical. Therefore the stack voltage measured by the fuel cell voltage sensor 64 and the battery voltage measured by the battery voltage sensor 13 are always the same as long as switch 66 is closed.

Still referring to Figure 4, one can see that the load circuit 17 is made up of an electric machine 73 that is intended to work as a motor during phases of traction an to work as a generator during phases of regenerative braking. Furthermore, number 75 refers to a motor current sensor, number 77 refers to a motor voltage sensor, number 79 refers to a motor controller, and number 81 refers to a power converter. Depending on the type of electric machine used, the type of converter used for the power converter 81 can vary. If for instance the motor 73 is a DC brushless motor controlled by pulse width modulation, the power converter 81 will be a DC/DC converter supplying a constant output voltage. In contrast, if for example the electric machine 73 is a synchronous motor, the power converter 81 will be a DC/AC converter. Figure 4 also shows a power management controller 85 that controls the fuel cell controller 58, the motor controller 79, as well as the switch 66. The power management controller 85 regulates the circulation of power as a function of the position of an accelerator pedal of a vehicle (not shown) and as a function of conditions prevailing in the electricity supply system.

The fuel cell system 14 is controlled by the fuel cell controller 58. Controller 58 receives information from the hydrogen pressure sensor 111 (Figure 3) and the oxygen pressure sensor 121 (Figure 3), as well as from the fuel cell voltage sensor 64. According to the illustrated example, the fuel cell voltage sensor measures the output voltage from the fuel cell stack 1 as a whole. Thus the measured output voltage amounts the sum of the contributions from all the individual fuel cells in the stack. As the fuel cells are all subjected to substantially the same operating conditions, they all produce approximately the same output voltage. Therefore, the measured output voltage of the stack can be used to calculate an estimated voltage for an individual fuel cell. However, it is also possible to measure the output voltages of the individual cells separately, or else to divide the individual cells of the stack into several groups, each having an output voltage.

The fuel cell controller 58 (Figure 4) controls the pressure of both the hydrogen and the oxygen supplied to the fuel cell stack by adjusting the hydrogen and oxygen supply valves 110, 120 and, if necessary, by directly controlling the operation of the auxiliary recirculating pumps 213, 223. The process that allows fuel cell controller 58 to control the reactant pressure in the fuel cells will now be explained in detail. The reactants are consumed in the fuel cells at a rate corresponding to the amount of electric current supplied by the stack 1. When, in the absence of a change of load, fuel cell controller adjusts one of the supply valves 110, 120 towards the open position, the supplied stream of hydrogen or of oxygen increases and exceeds the amount of hydrogen or of oxygen consumed in the fuel cells. This causes the pressure at the anode or the cathode of the fuel cells to increase also. In contrast, when fuel cell controller 58 adjusts one of the supply valves 110, 120 towards the closed position, the supplied stream of hydrogen or of oxygen decreases and ceases to be enough to compensate for the amount of hydrogen or of oxygen consumed in the fuel cells. This causes the pressure at the anode or the cathode of the fuel cells to decrease. As previously mentioned, according to the present invention the hydrogen and the oxygen supplied to the fuel cell stack are substantially pure hydrogen and substantially pure oxygen respectively. This feature allows the hydrogen and the oxygen present in the fuel cell to be almost entirely consumed. It is thus possible for the pressure at the cathode and at the anode of the fuel cell to decrease far bellow the external atmospheric pressure, approximately down to the water vapor pressure. Therefore, in the case of a fuel cell stack operating at a temperature of approximately 60° C., the pressure can go as low as 0.2 bar_{absolute}.

Care is taken that the hydrogen pressure is at least 70 % of the oxygen pressure, preferably at least 100 % of the oxygen pressure, so as not to induce in the fuel cells the condition known as "fuel starvation". Fuel starvation, if more than momentary, is known to deteriorate fuel cells. However, other operating conditions wherein the hydrogen pressure is less than 100 % of the oxygen pressure can also be advantageous, in particular in the case when it is desirable to increase the water content of the membrane. Furthermore, in order to avoid the appearance of a large pressure difference between the anode and the cathode of the fuel cells, the hydrogen pressure is preferably adjusted to follow the oxygen pressure. At any rate, the hydrogen pressure is confined in a range between +/- 30 % of the oxygen pressure.

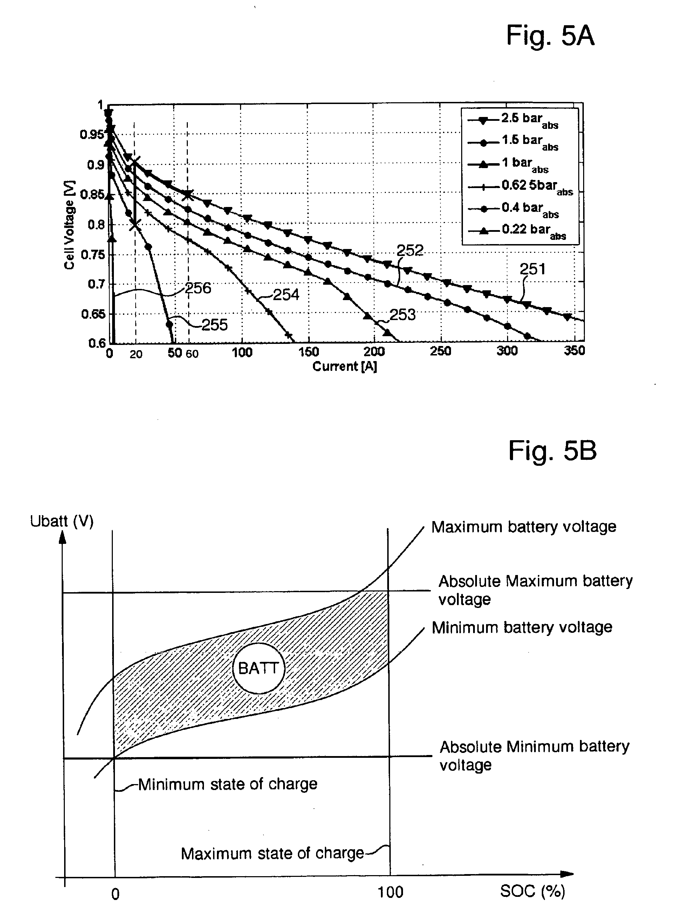

Figure 5A is a diagram showing polarization curves (current/voltage curves referenced 251 to 256) for a polymer electrolyte fuel cell operating at a temperature of approximately 60°C and at six different pressures (2.5 barabs, 1.5 bar_{abs}, 1 bar_{abs}, 0.62 bar_{abs}, 0.4 bar_{abs}, 0.22 bar_{abs}). Figure 5A shows that for a constant operating voltage of the fuel cell (or in other words for a constant voltage of the associated storage battery) the current changes considerably with the pressure, thus allowing the power delivered by the fuel cell to be adjusted. In fact, it can be calculated from the curves of Figure 5A that, for a constant operating voltage of 0.85 volts, output power is reduced by almost a factor 10 when the stack is operated at a pressure of 0.4 bar instead of 2.5 bar. This example illustrates one of the advantages of using a fuel cell system supplied with substantially pure oxygen gas instead of air. Indeed, air is a nitrogen rich gas and the presence of the nitrogen makes achieving operating pressures substantially below ambient considerably more difficult.

Figure 5B is a diagram showing the minimum and maximum storage battery voltages as function of the state of charge (SOC) of the battery. As is well known, the closed circuit voltage of a battery in a given SOC is determined both by its open circuit voltage (OCV) and by the voltage loss due to the flow of current through the battery. Figure 5B illustrates that the maximum allowable voltage for a battery in a given SOC is determined by adding the voltage loss associated with the maximum allowable charge current to the OCV. In an equivalent manner, the minimum allowable voltage is determined by deducting the voltage loss associated with the maximum allowable discharge current from the OCV. Naturally, the maximum charge and discharge currents are both a function of the SOC as well. In particular, when the SOC is 100% of the maximum usable charge, the maximum allowable charge current is zero, and when the SOC is 0% of the maximum usable charge, the maximum allowable discharge current is zero. The shaded area in Figure 5B corresponds to the allowable battery operating area.

As previously stated, since the storage battery and the fuel cell stack are directly connected, their voltages are the same. Therefore, if the output voltage of the fuel-cell stack is above the OCV of the battery and the output voltage further increases, the charge current supplied by the stack to the battery increases as well. Conversely, if the output voltage from the stack is below the OCV of the battery and the output voltage further decreases, the discharge current supplied by the battery is caused to increase. In other words, the storage battery acts as a buffer to limit variations in the total load power connected to the stack. One will understand that, since the storage battery and the stack share the same voltage, the size of the storage battery should be chosen so that its OCV corresponds to an average fuel cell voltage that lies within the interval between the previously mentioned upper and lower safety limits. In the present example, the safety limits for ensuring against high and low cell voltages are .90 volts and .65 volts respectively. Preferably, the average fuel cell voltage corresponding to the OCV should remain between said upper and lower safety limits for any allowable SOC of the battery; that is for any SOC of the battery in the interval between the SOC corresponding to 0% of the maximum usable charge, to the SOC corresponding to 100% of the maximum usable charge, according to the specifications of the storage battery.

The fuel cell controller 58 is arranged to reduce the pressure of the reactant gases supplied to the fuel cell stack by partially or completely closing the hydrogen and oxygen supply valves 110, 120. However, if either of the supply valves 110 or 120 is entirely or nearly closed, the corresponding ejector pump 113 or 123 becomes useless, and the flow of used gas trough the recirculating line 11 R or 12R comes to a standstill. In such a situation, the pressures in the supply (160 or 165) and the exhaust (180 or 185) manifolds tend to equalize, and the pressure drop needed for driving reactant gas along the flow fields 170 or 175 disappears. In order to allow the fuel cell stack to continue to operate even when the supply valve 110 or 120 is closed, control unit 15 turns on the corresponding auxiliary pump 213 or 223. When either of pumps 213 or 223 is operating, it reinjects leftover reactant gas present in the exhaust manifold 180 or 185 into the corresponding supply manifold 160 and 165. The use of auxiliary pumps 213 and 223 allows to maintain the necessary pressure difference between supply and exhaust manifolds.

As described above, the fuel cell system of the passive hybrid power supply in which the method of the present invention is implemented, comprises electronic controls, supply valves 110, 120 controlled by the fuel cell controller 58, pumps 213, 223, and a gas-liquid separator. The fuel cell system also comprises a cooling circuit 56 using water pumps, and it can possibly comprise electrical heating means as well. All these elements, and others, form what are called auxiliaries. These auxiliaries need electricity to operate and constitute what is generally referred to as the parasitic load of the fuel cell system. Therefore, when the fuel cell system is working, the power demand is never zero, even when in an idling state (i.e. when in zero connected load operating conditions). In the present example, a realistic number for the parasitic load power is approximately 600 Watts.

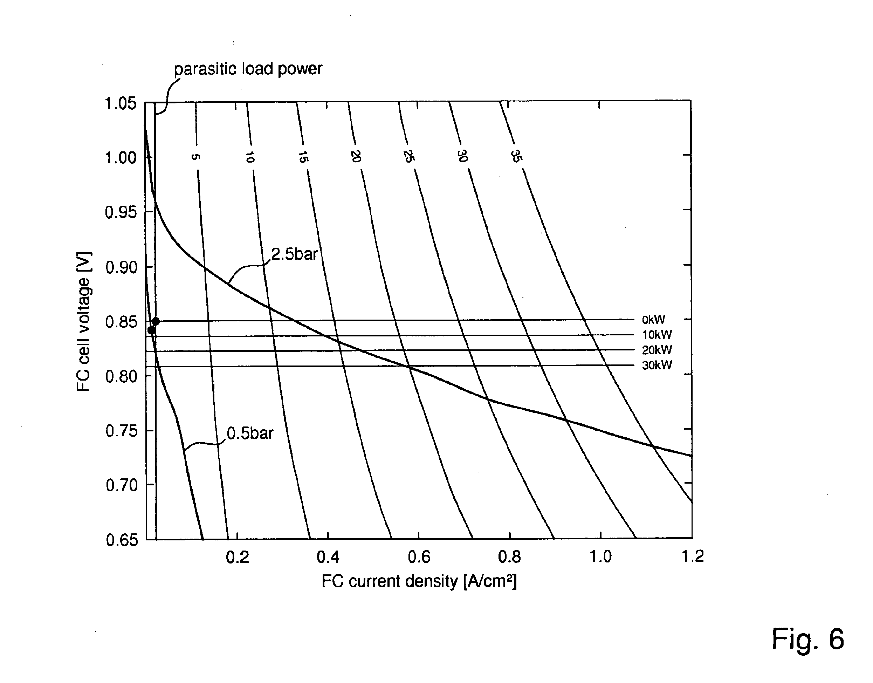

Figure 6 is a diagram showing how the load can be shared between the fuel cell system and the storage battery. The horizontal lines in the center of the diagram are iso-power lines of a fully charged battery (SOC = 100%). The nearly vertical thin lines are iso-power lines of the fuel cell stack. The nearly vertical bold line at the left of the diagram is an iso-power line corresponding to 600 Watts (the parasitic load power). Figure 6 shows that, by controlling the reactant pressure in the fuel cells, it is possible to cope with low output load conditions while avoiding high cell voltage, even when the state of charge of the storage battery is already 100%. Indeed, The diagram shows that the OCV for the fully charge battery corresponds to 0.85 volts/cell. If the pressure in the fuel cell is reduced to 0.5 bar while maintaining the fuel cell voltage constant, the amount of power produced by the fuel cell stack is reduced to about 300 Watts. In this case another 300 Watts must be drawn from the storage battery to satisfy the demand of the auxiliaries. Another possibility is to slightly increase the pressure until the stack produces 600 Watts of electric power.

Still referring to Figure 6, one will notice that the operating point at the intersection of the 2.5 bar line with the 600 Watts iso-power line corresponds to a fuel cell voltage of almost 1 volt. In other words, it is not possible to avoid high cell voltage without lowering the operating pressure in a passive hybrid power supply. In other words, Figure 6 illustrates how the present invention makes it possible to dispense with shutting down the fuel cell system in zero connected load operating conditions, even if no energy storage capacity is available in the battery.

## Claims

1. A method of operating a passive hybrid power supply connected to a variable load, in conditions where the variable load is zero or near zero, the passive hybrid power supply comprising a PEM fuel cell system (1) and a storage battery (18) connected in parallel to the variable load (17), the PEM fuel cell system comprising a plurality of individual PEM fuel cells connected in series and auxiliaries including a controllable hydrogen recirculating pump (213) and a controllable oxygen recirculating pump (223), and the method comprising :
- supplying a stream of substantially pure hydrogen to the anodes of said fuel cells;
- supplying a stream of substantially pure oxygen to the cathodes of said fuel cells;
- monitoring an electric current supplied by the storage battery;
- monitoring an output voltage shared by the plurality of individual fuel cells connected in series and by the battery;
- evaluating a state of charge (SOC) of the battery based on said electric current and said output voltage;
- monitoring a hydrogen pressure in the fuel cells;
- monitoring an oxygen pressure in the fuel cells;
- limiting the stream of hydrogen and the stream of oxygen and actuating the hydrogen and oxygen recirculating pumps in such a way as to bring and maintain the hydrogen and oxygen pressures below 0.7 bar_{absolute} while maintaining said hydrogen pressure between 70 and 130 % of said oxygen pressure, in such a way as to ensure that the output voltage is maintained at a level corresponding to less than 0.90 volts/cell and does not exceed the maximum voltage limit of the battery.

2. The method of claim 1, wherein said method comprises adjusting said hydrogen stream and said oxygen stream in such a way that said output voltage remains at a level corresponding to between 0.70 and 0.85 volts/cell.

3. The method of claim 1 or 2, wherein the storage battery has an open circuit voltage that corresponds to between 0.75 and 0.80 volts/fuel cell when the state of charge of the battery is 50%.

## Patentansprüche

1. Verfahren zum Betreiben einer passiven Hybrid-Leistungsversorgung, die mit einer variablen Last verbunden ist, unter Bedingungen, unter denen die variable Last null oder fast null ist, wobei die passive Hybrid-Leistungsversorgung ein PEM-Brennstoffzellensystem (1) und eine Speicherbatterie (18), die zu der variablen Last (17) parallel geschaltet sind, umfasst, wobei das PEM-Brennstoffzellensystem mehrere einzelne PEM-Brennstoffzellen, die in Reihe geschaltet sind, und Zusatzgeräte einschließlich einer steuerbaren Wasserstoffumwälzpumpe (213) und einer steuerbaren Sauerstoffumwälzpumpe (223) enthält, wobei das Verfahren umfasst:
- Zuführen eines Stroms von im Wesentlichen reinem Wasserstoff zu den Anoden der Brennstoffzellen;
- Zuführen eines Stroms von im Wesentlichen reinem Sauerstoff zu den Katoden der Brennstoffzellen;
- Überwachen eines elektrischen Stroms, der durch die Speicherbatterie geliefert wird;
- Überwachen einer Ausgangsspannung, die sowohl an den mehreren, einzelnen Brennstoffzellen, die in die Reihe geschaltet sind, als auch an der Batterie anliegen;
- Bewerten eines Ladezustands (SOC) der Batterie anhand des elektrischen Stroms und der Ausgangsspannung;
- Überwachen eines Wasserstoffdrucks in der Brennstoffzelle;
- Überwachen eines Sauerstoffdrucks in der Brennstoffzelle;
- Begrenzen des Stroms von Wasserstoff und des Stroms von Sauerstoff und Betätigen der Wasserstoff- und der Sauerstoffumwälzpumpe in der Weise, dass der Wasserstoff- und der Sauerstoffdruck unter 0,7 bar_{absolut} gebracht und gehalten werden, wobei der Wasserstoffdruck im Bereich von 70 bis 130 % des Sauerstoffdrucks gehalten wird, derart, dass sichergestellt ist, dass die Ausgangsspannung auf einem Pegel gehalten wird, der weniger als 0,90 Volt/Zelle entspricht, und die maximale Spannungsgrenze der Batterie nicht überschreitet.

2. Verfahren nach Anspruch 1, wobei das Verfahren das Einstellen des Wasserstoffstroms und des Sauerstoffstroms in der Weise, dass die Ausgangsspannung auf einem Pegel bleibt, der einem Wert im Bereich von 0,70 bis 0,85 Volt/Zelle entspricht, umfasst.

3. Verfahren nach Anspruch 1 oder 2, wobei die Speicherbatterie eine Spannung bei offenem Kreis hat, die einem Wert im Bereich von 0,75 bis 0,80 Volt/Brennstoffzelle entspricht, wenn der Ladezustand der Batterie 50 % beträgt.

## Revendications

1. Procédé pour faire fonctionner un générateur hybride passif qui est connecté à une charge variable, dans des conditions où la charge variable est zéro ou proche de zéro, le générateur hybride passif comportant un système à pile à combustible (1) à membranes échangeuses de protons (PEM) et une batterie accumulatrice (18) connectés en parallèle à la charge variable (17), le système à pile à combustible PEM comprenant une pluralité de cellules PEM reliées en série et des accessoires comprenant une pompe ajustable (213) pour la recirculation de l'hydrogène et une pompe ajustable (223) pour la recirculation de l'oxygène, et le procédé comprenant les étapes de
- fournir un flux d'hydrogène sensiblement pur aux anodes des dites cellules PEM ;
- fournir un flux d'oxygène sensiblement pur aux cathodes des dites cellules PEM ;
- contrôler un courant électrique fourni par la batterie accumulatrice ;
- contrôler une tension de sortie commune à la pile à combustible et à la batterie accumulatrice ;
- évaluer un état de charge de la batterie à partir du dit courant électrique et de ladite tension de sortie ;
- contrôler la pression de l'hydrogène dans les cellules PEM ;
- contrôler la pression de l'oxygène dans les cellules PEM ;
- limiter le flux d'hydrogène et le flux d'oxygène et actionner les pompes pour la recirculation de l'hydrogène et de l'oxygène de manière à amener et à maintenir ladite pression de l'hydrogène au-dessous de 0.7 bar_{absolue} tout en maintenant ladite pression de l'hydrogène entre 70 et 130 % de ladite pression de l'oxygène, de telle sorte que la tension de sortie est maintenue à un niveau correspondant à moins de 0.90 volts/cellule et ne dépasse pas la valeur limite maximum de la tension de la batterie.

2. Procédé selon la revendication 1, dans lequel ledit procédé comprend d'ajuster ledit flux d'hydrogène et ledit flux d'oxygène de telle sorte que ladite tension de sortie demeure à un niveau correspondant à entre 0.75 et 0.80 volts/cellule.

3. Procédé selon la revendication 1 ou 2, dans lequel la batterie accumulatrice à une tension à vide correspondant à entre 0.75 et 0.80 volts/cellule lorsque l'état de charge de la batterie est de 50 %.
